# EUROPÄISCHE PATENTSCHRIFT

(11) **EP 2 340 721 B1**
(45) Veröffentlichungstag und Bekanntmachung des Hinweises auf die Patenterteilung: **12.12.2012**
(21) Anmeldenummer: 09180237.1
(22) Anmeldetag: 21.12.2009
(51) Int. Cl.: A23D 9/013, A23L 1/30, C11B 15/00

(54) **Zusatz zur Verbesserung der Konsistenz von Brat-, Back-, Siede- und/oder Frittierfetten,bzw. -ölen**
Additive for improving the consistency of frying, baking, boiling and/or deep frying oils/ fats
Additif destiné à l'amélioration de la consistance d'huiles/ graisses de cuisine, de cuisson, de condensation et/ou de friture

(43) Veröffentlichungstag der Anmeldung: 06.07.2011
(73) Patentinhaber: Gertz, Alexander, 58135 Hagen (DE); Gertz, Christiane, 58579 Schalksmühle (DE)
(72) Erfinder: Gertz, Alexander, 58135 Hagen (DE); Gertz, Christiane, 58579 Schalksmühle (DE)
(74) Vertreter: UEXKÜLL & STOLBERG

(56) Entgegenhaltungen:
- WO-A1-00/69273
- WO-A2-00/24360
- S.MARTINI ET AL.: "Effect of the addition of waxes on the crystallization behavior of anhydrous milk fat" JOURNAL OF THE AMERICAN OIL CHEMISTS' SOCIETY, Bd. 85, 1. November 2008 (2008-11-01), Seiten 1097-1104, XP002578610
- M.MARUDOVA, N.JILOV: "Creating a yield stress in liquid oils by the addition of crystallisable modifiers" JOURNAL OF FOOD ENGINEERING, Bd. 51, 7. März 2001 (2001-03-07), Seiten 235-237, XP002578611
- ROGERS ET AL: "Novel structuring strategies for unsaturated fats - Meeting the zero-trans, zero-saturated fat challenge: A review" FOOD RESEARCH INTERNATIONAL, ELSEVIER APPLIED SCIENCE, BARKING, GB LNKD- DOI:10.1016/J.FOODRES.2009.02.024, Bd. 42, Nr. 7, 1. August 2009 (2009-08-01) , Seiten 747-753, XP026131983 ISSN: 0963-9969 [gefunden am 2009-03-01]
- J.F. TORO-VAZQUEZ ET AL.: "Thermal and textural properties of organogels developed by candelilla wax in safflower oil" JOURNAL OF THE AMERICAN OIL CHEMISTS' SOCIETY, Bd. 84, 13. Oktober 2007 (2007-10-13), Seiten 989-1000, XP002578612

## Beschreibung

### Technisches Gebiet

Die vorliegende Erfindung betrifft Öle und Fette, die zum Braten, Frittieren, Vorfrittieren und/ oder Siedebacken z.B. zur Herstellung von Chips und/oder Siedegebäck verwendbar sind und im Folgenden als entweder als "Fette" oder im Zusammenhang mit ihrer Verwendung als "Bratfette", "Frittierfette" und/oder "Siedefette" bezeichnet werden.

### Definitionen

Der Begriff "Fett" schließt im Zusammenhang der vorliegenden Erfindung Fette, Öle und Fettmischungen ein. Im Zusammenhang der vorliegenden Erfindung werden mit Ölen Fette bezeichnet, die bei Umgebungstemperatur flüssig oder halbflüssig sind.

Der Begriff Umgebungstemperatur umfasst Temperaturen zwischen 15°C und 40°C, vorzugsweise zwischen 20°C und 25°C.

### Technischer Hintergrund

Brat-, Siede- und Frittierfette müssen selbst bei langer Hitzebelastung stabil bleiben. Ein neutraler Geschmack, ein hoher Rauchpunkt und ein nur langsam stattfindender Fettverderb begünstigt die Bekömmlichkeit von Siedegebäcken und Frittiergut. Nicht modifizierte Öle sind als Medium zum Siedebacken oder Frittieren weniger geeignet, da sie thermisch instabil sind und bei starkem Erhitzen (T>160°C) sehr schnell verderben. Ferner haben die darin gebackenen Siedegebäcke oft eine ölig triefende Kruste. Bei der Herstellung von Siedegebäcken wie Doghnuts, Krapfen, Quarkbällchen oder Spritzgebäck ist es wünschenswert, dass das Fett der Backware nach dem Siedebacken anhaftet und nicht abtropft. Gleiches gilt auch für das Vorfrittieren von Kartoffelerzeugnissen, die erst später beim Verbraucher endfrittiert werden. Bei der Herstellung von Chips (wie Kartoffelchips) soll darüber hinaus deren Zusammenhaften vermieden werden.

Zu diesem Zweck werden als Siede- und/oder Frittierfette vorzugsweise bei Raumtemperatur feste Fette wie gehärtete Pflanzenöle, oder feste Fette wie Erdnussfett oder Palmöl verwendet. Diese festen Fette haben allerdings auf Grund ihres zum Teil hohen Anteils an Transfettsäuren und/oder gesättigten Fettsäuren ernährungsphysiologische Nachteile. Gehärtetes Erdnussfett hat in der Regel einen Anteil an 30-35 Gew.% Transfettsäuren und Palmöl besteht zu etwa 50-60 Gew.% aus gesättigten Fettsäuren. Bei der Verwendung von Palmöl kommt als Nachteil hinzu, dass Siedegebäcke eine unerwünschte Graufärbung erhalten.

Empfohlen werden daher Fette mit einem Gehalt von weniger als 10 Gew.% an gesättigten Fettsäuren. Ferner ist in einigen Ländern der Transfettsäuregehalt im gehärteten Fett auf wenige Prozente (z.B. maximal 2 Gew.%) begrenzt. Solche Fette sind ohne Zusätze aber bei Umgebungstemperatur flüssig oder halbflüssig und weisen die oben beschriebenen Nachteile auf.

Um stichfeste Fette mit einem geringen Anteil an gesättigten Fettsäuren herstellen zu können, werden für Backfette beispielsweise Pflanzenöle mit gehärteten Fetten oder Palmöl auf ca. 60-70°C erwärmt und anschließend im Kristallisator (Kratzkühler) durch Abkühlen auf Raumtemperatur verfestigt. Die dabei gewonnenen Kristallstrukturen haben aber den Nachteil instabil zu sein und werden nach einem erneuten Erhitzen beim Siedebacken, Braten oder Frittieren nicht wieder gebildet, wodurch die Fettmischung bei Raumtemperatur flüssig bleibt. Zudem steigt mit Zugabe der gehärteten Fette und/oder von Palmöl der Anteil an unerwünschten Transfettsäuren bzw. gesättigten Fettsäuren in der Fettmischung.

Es ist auch bekannt Fetten für Schokolade, Kuvertüren und ähnlichen Produkten hochschmelzende Triglyceride aus gehärteten Fetten, Tristearate oder Sorbitantristearat in einer Menge von etwa 1 Gew.% bis 2 Gew.% als Kristallisationsbeschleuniger zuzusetzen. Die Wirkung der Triglyceride beruht auf der schneller einsetzenden Aushärtung, vor Bildung der Kristalle der Schmelze. Bei Anwesenheit einer zu geringen Menge der gehärteten Triglyceride zum Fett verlieren diese aber ihre kristallbeschleunigende Wirkung, wenn die Fettmischungen beim Wiederaufschmelzen Temperaturen von mehr als 70°C überschreiten. Ferner ist die dabei gebildete Härte einer auskristallisierten Fettmischung zu gering, um ein Abtropfen des Fettes vom Backgut zu verhindern. Auch in diesem Fall erhöht sich der Anteil an unerwünschten Transfettsäuren bzw. gesättigten Fettsäuren in der Fettmischung.

Die WO 00/24360 A2 beschreibt ein Verfahren zur Verfestigung von flüssigen Ölen, wobei mindestens ein flüssiges Öl und ein festes Fett zur Bildung einer Mischung derselben gemischt werden und die Mischung in eine homogene Konsistenz überführt wird.

S. Martini et al "Effect of the addition of waxes on the crystallization behavior of anhydrous milk fat", J Am Oil Chem Soc (2008), 85:1097-1104 offenbart den Effekt bei der Zugabe von Wachsen des Kristallisationsverhaltens von Milchfett.

Die WO 00/69273 A1 offenbart Fettzusammensetzungen, die ein Pflanzenöl und eine pflanzliche Wachskomponente umfassen.

Aufgabe der vorliegenden Erfindung ist die Bereitstellung eines Additivs, das die Kristallisation von Brat-, Siede-und/oder Frittierfetten thermoreversibel beschleunigt, wobei der Anteil an unerwünschten Transfettsäuren bzw. gesättigten Fettsäuren im Fett nicht erhöht wird.

### Offenbarung der Erfindung

Die Aufgabe wird durch die Verwendung einer Mischung gelöst, die ein Fett, das ein ölsäurereiches oder linolsäurereiches Pflanzenöl umfasst und ohne Zusatz bei Umgebungstemperatur flüssig oder halbflüssig ist, und Bienenwachs umfasst, als Brat-, Siede- und/oder Frittierfett, wobei der Anteil des Wachses im Fett 2 bis 3 Ges.%, bezogen auf das Gesamtgewicht des Fetts, beträgt.

Es wurde gefunden, dass die kristallisationsbeschleunigende Wirkung durch die Zugabe des erfindungsgemäßen Wachses zum Fett stark verbessert werden kann, so dass Fette ausreichender Härte gebildet werden. Dieser Vorgang ist thermoreversibel, auch wenn die Fettmischung mehrfach auf Temperaturen über 170°C erwärmt wurde. Dies ermöglicht die Verwendung der erfindungsgemäßen Wachse in Fetten bei Back-, Frittier- und Siedetemperaturen. Dabei bleibt das ernährungsphysiologisch günstige Fettsäurespektrum des ursprünglichen Fettes mit einem niedrigem Anteil an gesättigten bzw. Transfettsäuren erhalten.

Die Zugabe des erfindungsgemäßen Wachses kann direkt, als Mischung mit Fetten oder als Wasser-in-Öl Emulsion erfolgen. Die Wirkung als Kristallisationsbeschleuniger kann einerseits durch Zugabe des Wachses erzielt werden. Dies ist insbesondere dann Vorteilhaft, wenn das Fett bereits ein Anteil an gesättigten Fettsäuren enthält. Allerdings ist die Zugabe des erfindungsgemäßen Wachses alleine auch dann Wirksam, wenn das Fett keinen hohen Anteil an gesättigten Fettsäuren enthält. Zum anderen kann dem Fett eine Mischung des erfindungsgemäßen Wachses und gehärteten Triglyceriden zugesetzt werden. Dies kann dann erfolgen, wenn das Fett nur einen sehr geringen Anteil an gesättigten Fettsäuren (<5 Gew. %) enthält.

Die Zugabe der erfindungsgemäßen Wachses als Additiv zum Fett hat weiterhin den Vorteil, dass es in Back- oder Frittierstrassen leicht händelbar ist, da das flüssige oder halbflüssige Fett bei Umgebungstemperatur zunächst in die Backstrasse gepumpt und das Wachs oder die Wachs/Triglycerid-Mischung danach zugegeben werden kann. Die so erhaltene Mischung wird sodann auf eine Temperatur von vorzugsweise 65-70°C so lange erwärmt bis das Wachs gelöst ist. Man erhält ein bei Raumtemperatur nichttropfendes Back-, Siede- oder Frittierfett, das sich in der hergestellten Speise geschmacklich nicht bemerkbar macht.

Das Wachs ist vorzugsweise Bienenwachs oder die Wachsmischung enthält vorzugsweise Bienenwachs oder ein Derivat derselben, weil dessen Zugabe lebensmittelrechtlich *quantum satis* in der EU möglich ist. Andere Wachse dürfen aus lebensmittelrechtlichen Gründen nur begrenzt eingesetzt werden. Der Anteil des Wachses im Fett beträgt 2 bis 3 Gew.%, bezogen auf das Gesamtgewicht des Fettes.

Das Fett ist ein pflanzliches Öl mit einem hohen Gehalt an einfach- als auch an mehrfach ungesättigten Fettsäuren wie ölsäurereiches oder linolsäurereiches Sonnenblumenöl, Sojaöl und/oder Rapsöl und Mischungen derselben. Das Fett ist ohne Zusatz bei Umgebungstemperatur flüssig oder halbflüssig.

### Beispiel

Es wurden zwei Versuchsreihen durchgeführt, bei denen (a) ölsäurereiches Rapsöl und (b) linolsäurereiches Sonnenblumenöl mit verschiedenen Mengen an Bienenwachs versetzt und auf deren Kristallisationseigenschaften untersucht wurde. Dabei wurde die Fettmischung auf 170°C erwärmt und anschließend auf Umgebungstemperatur abkühlen gelassen. Die dynamische Viskosität der abgekühlten Fettmischung als Maß für die Tropfeigenschaft bei 20°C wurde mit dem Kugelfallviskosimeter nach DGF-Einheitsmethode C-IV 7b (08) entspricht DIN EN ISO12058 ermittelt. Die Ergebnisse und die Zusammensetzung der Öle sind in den Tabellen 1, 2 und 3 zusammengefasst.

**Tabelle 1**

| Rapsöl | | Sonnenblumenöl (Öl mit einem hohen Linolsäuregehalt) | |
|---|---|---|---|
| Fettsäurezusammensetzung in g berechnet als Triglycerid in 100 g Öl | | Fettsäurezusammensetzung in g berechnet als Triglycerid in 100 g Öl | |
| gesättigte Fettsäuren | 6, 7 | gesättigte Fettsäuren | 11,6 |
| einfach ungesättigte Fettsäuren | 63, 3 | einfach ungesättigte Fettsäuren | 22 |
| mehrfach ungesättigte Fettsäuren | 30 | mehrfach ungesättigte Fettsäuren | 66, 4 |
| Transfettsäuren | 0 | Transfettsäuren | 0 |

**Tabelle 2**

| | | | | |
|---|---|---|---|---|
| Rapsöl | 100,00% | 100,00% | 100,00% | 100,00% |
| Bienenwachs | 0,00% | 1,00% | 2,00% | 3,00% |
| Dichte bei 20°C in g/cm³ | 0,913 | 0,913 | 0,913 | 0,905 |
| Viskosität nach Kugelfallviskosimeter bei 20°C in mm²/s | 77,1 | 93,09 | 198,07 | 474,79 |

**Tabelle 3**

| | | | | |
|---|---|---|---|---|
| Sonnenblumenöl | 100,00% | 100,00% | 100,00% | 100,00% |
| Bienenwachs | 0,00% | 1,00% | 2,00% | 3,00% |
| Dichte bei 20°C in g/cm³ | 0,914 | 0,917 | 0,916 | 0,908 |
| Viskosität nach Kugelfallviskosimeter bei 20°C in mm²/s | 67, 46 | 70,88 | 124,85 | 343,59 |

Die Tabellen 2 und 3 zeigen, dass die Fettmischungen nach dem Erhitzen ohne Zugabe von Bienenwachs aufgrund des geringen Festanteils zu dünnflüssig sind und damit keine ausreichende Härte aufweisen. Die Härte der Fettmischung wird durch Verwendung von Bienenwachs wesentlich verbessert.

## Patentansprüche

1. Verwendung einer Mischung, die ein Fett, das ein ölsäurereiches oder linolsäurereiches Pflanzenöl umfasst und ohne Zusatz bei Umgebungstemperatur flüssig oder halbflüssig ist, und Bienenwachs umfasst, als Brat-, Siede- und/oder Frittierfett, wobei der Anteil des Wachses im Fett 2 bis 3 Gew.%, bezogen auf das Gesamtgewicht des Fetts, beträgt.

2. Verwendung nach einem der vorgehenden Ansprüche, **dadurch gekennzeichnet, dass** das Fett aus Sonnenblumenöl, Sojaöl und/oder Rapsöl ausgewählt ist.

3. Verwendung nach einem der vorgehenden Ansprüche, **dadurch gekennzeichnet, dass** der Anteil des Wachses im Fett 0,1 bis 5 Gew.%, bezogen auf das Gesamtgewicht des Fetts, beträgt.

4. Verwendung nach einem der vorgehenden Ansprüche, **dadurch gekennzeichnet, dass** der Anteil des Wachses im Fett 1 bis 4 Gew.%, bezogen auf das Gesamtgewicht des Fetts, beträgt.

## Claims

1. Use of a mixture which comprises a fat which without addition is liquid or semi-liquid at ambient temperature, and which comprises a vegetable oil which is rich in oleic acid or linoleic acid, and beeswax as a roasting, doughfrying and/or deep-frying fat, wherein the fraction of the wax in the fat is 2% to 3% by weight, based on the total weight of the fat.

2. Use according to any of the previous claims, **characterized in that** the fat is selected from sunflower oil, soya oil and/or rapeseed oil.

3. Use according to any of the previous claims, **characterized in that** the amount of the wax in the fat is 0.1% to 5% by weight, based on the total weight of the fat.

4. Use according to any of the previous claims, **characterized in that** the amount of the wax in the fat is 1% to 4% by weight, based on the total weight of the fat.

## Revendications

1. Utilisation d'un mélange qui est une graisse qui comprend une huile végétale riche en acide oléique ou en acide linoléique et est liquide ou semi-liquide sans additif à température ambiante et comprend de la cire d'abeille, comme graisse de cuisine, de condensation et/ou de friture, la proportion de cire dans la graisse étant de 2 à 3 % en poids par rapport au poids total de graisse.

2. Utilisation selon l'une des revendications précédentes, **caractérisée en ce que** la graisse est choisie parmi une huile de tournesol, une huile de soja et/ou une huile de colza.

3. Utilisation selon l'une des revendications précédentes, **caractérisée en ce que** la proportion de cire dans la graisse est de 0,1 à 5 % en poids, par rapport au poids total de graisse.

4. Utilisation selon l'une des revendications précédentes, **caractérisée en ce que** la proportion de cire dans la graisse est de 1 à 4 % en poids par rapport au poids total de graisse.
